# EUROPEAN PATENT SPECIFICATION

(11) **EP 3 569 656 B1**
(45) Date of publication and mention of the grant of the patent: **28.10.2020**
(21) Application number: 17890901.6
(22) Date of filing: 18.12.2017
(51) Int. Cl.: C08L 91/08, C08L 21/00, C08L 9/00, C08L 9/06, B60C 1/00

(54) **WAX, RUBBER COMPOSITION, AND PNEUMATIC TIRE**
WACHS, KAUTSCHUKZUSAMMENSETZUNG UND LUFTREIFEN
CIRE, COMPOSITION DE CAOUTCHOUC ET PNEUMATIQUE

(30) Priority: 16.01.2017 JP 2017005317
(43) Date of publication of application: 20.11.2019
(73) Proprietor: Sumitomo Rubber Industries, Ltd., Kobe-shi, Hyogo 651-0072 (JP)
(72) Inventor: KONISHI, Tomoko, Kobe-shi Hyogo 651-0072 (JP); KAWAMURA, Takanobu, Kobe-shi Hyogo 651-0072 (JP)
(74) Representative: Manitz Finsterwald Patent- und Rechtsanwaltspartnerschaft mbB
(86) International application number: PCT/JP2017/045232
(87) International publication number: WO 2018/131389

(56) References cited:
- WO-A1-2013/046845
- WO-A1-2013/108454
- WO-A1-2015/001935
- JP-A- H04 202 474
- JP-A- 2015 013 955
- US-A- 3 423 348
- US-A1- 2016 102 194

## Description

### TECHNICAL FIELD

The present invention relates to a wax, a rubber composition containing the wax, and a pneumatic tire containing the rubber composition.

### BACKGROUND ART

Rubber compositions for tire components such as treads or sidewalls contain waxes and other additives to prevent ozone degradation, oxidative degradation, or pyrolytic degradation. These waxes migrate to the rubber surface, where they form a film that physically protects the rubber from ozone, oxygen, and harmful gas stimuli.

In cold and temperate climates, such waxes do not bloom readily, and it is difficult to ensure ozone resistance. Thus, when conventional waxes are incorporated in an amount small enough to prevent discoloration, poor ozone resistance may be obtained. In hot climates, on the other hand, as the rubber molecules move actively, the waxes bloom readily, and it is possible to easily ensure ozone resistance, but the tire surface will turn white easily. It is therefore difficult to prevent white discoloration while obtaining excellent ozone resistance over a wide range of ambient temperatures from cold to hot climates.

In this context, Patent Literature 1 suggests incorporating a wax having a broad carbon number distribution for the purpose of preventing discoloration well while obtaining excellent ozone resistance over a wide range of ambient temperatures. However, this technique is inadequate to prevent white discoloration and leaves room for improvement.

Patent Literature 2 discloses a vulcanizable composition comprising a rubber polymerization product comprising a natural rubber, a synthetic rubber and a petroleum paraffin wax.

Patent Literature 3 discloses a rubber composition comprising a diene rubber, a tackifier and a wax, wherein the wax contains a linear saturated hydrocarbon C25-C30 from 20.0 to 40.0 mass %, C35-C40 from 8.0 to 18.0 mass %, and C45 and more from 1.0 to 6.0 mass %.

### CITATION LIST

### PATENT LITERATURE

Patent Literature 1: JP 2013-159666 A
Patent Literature 2: US 3 423 348 A
Patent Literature 3: US 2016 / 102194 A1

### SUMMARY OF INVENTION

### TECHNICAL PROBLEM

The present invention aims to solve the above problem and provide a wax capable of improving discoloration resistance while maintaining excellent ozone resistance over a wide range of ambient temperatures, a rubber composition containing the wax, and a pneumatic tire containing the rubber composition.

### SOLUTION TO PROBLEM

The present invention relates to a wax, having a ratio of (A) a total amount of C23-C32 normal alkanes to (B) a total amount of C33-C40 normal alkanes (A/B) of 1.7 to 6, a total amount of C23-C32 normal alkanes (A) of 40 to 70% by mass based on 100% by mass of the wax, and a total amount of C33-C40 normal alkanes (B) of 25% by mass or less based on 100% by mass of the wax.

The present invention also relates to a rubber composition, containing the wax.

The present invention also relates to a pneumatic tire, containing the rubber composition.

### ADVANTAGEOUS EFFECTS OF INVENTION

The wax of the present invention has a ratio of (A) the total amount of C23-C32 normal alkanes to (B) the total amount of C33-C40 normal alkanes (A/B) of 1.7 to 6, a total amount of C23-C32 normal alkanes (A) of 40 to 70% by mass based on 100% by mass of the wax, and a total amount of C33-C40 normal alkanes (B) of 25% by mass or less based on 100% by mass of the wax. Such a wax can improve the discoloration resistance of a rubber composition containing the wax or a pneumatic tire containing the rubber composition while maintaining excellent ozone resistance over a wide range of ambient temperatures.

### DESCRIPTION OF EMBODIMENTS

### [Wax]

The wax of the present invention has a ratio of (A) the total amount of C23-C32 normal alkanes to (B) the total amount of C33-C40 normal alkanes (A/B) of 1.7 to 6, a total amount of C23-C32 normal alkanes (A) of 40 to 70% by mass based on 100% by mass of the wax, and a total amount of C33-C40 normal alkanes (B) of 25% by mass or less based on 100% by mass of the wax.

As a result of studies, the present inventors have found that: normal alkanes with relatively high carbon numbers (C33-C40) have a strong tendency to turn white when they bloom. It has also been found that a high proportion of normal alkanes with relatively low carbon numbers (C23-C32) bloom in any climate from cold to hot climates, and that reducing the amount of relatively high carbon number (C33-C40) normal alkanes causes no problem. These findings indicate that by increasing the total amount of relatively low carbon number (C23-C32) normal alkanes relative to the total amount of relatively high carbon number (C33-C40) normal alkanes to fall within a predetermined range, discoloration resistance can be improved while maintaining excellent ozone resistance over a wide range of ambient temperatures.

The wax of the present invention is preferably a petroleum wax, more preferably a paraffin wax.

In the wax (100% by mass), the ratio of (A) the total amount of C23-C32 normal alkanes to (B) the total amount of C33-C40 normal alkanes (A/B) is 1.7 or higher, preferably 1.8 or higher, more preferably 2 or higher. When the ratio is 1.7 or higher, the wax provides good ozone resistance and good discoloration resistance. Also, the ratio (A/B) is 6 or lower, preferably 4.5 or lower, more preferably 4 or lower. When the ratio is 6 or lower, the wax provides good ozone resistance in hot climates.

The total amount of C23-C32 normal alkanes (A) based on 100% by mass of the wax is 40% by mass or more, more preferably 45% by mass or more, still more preferably 48% by mass or more. When the total amount (A) is 40% by mass or more, the wax tends to provide better ozone resistance and discoloration resistance. The total amount (A) is 70% by mass or less, more preferably 65% by mass or less, still more preferably 60% by mass or less. When the total amount (A) is 70% by mass or less, the wax tends to provide better ozone resistance in hot climates.

The total amount of C33-C40 normal alkanes (B) based on 100% by mass of the wax is preferably 5% by mass or more, more preferably 10% by mass or more, still more preferably 15% by mass or more. When the total amount (B) is 5% by mass or more, the wax tends to provide better ozone resistance in hot climates. The total amount (B) is 25% by mass or less, still more preferably 23% by mass or less. When the total amount (B) is 30% by mass or less, the wax tends to provide better ozone resistance and discoloration resistance.

The total amount of normal alkanes with carbon numbers of 22 and below based on 100% by mass of the wax may be 0% by mass, but is preferably 0.5% by mass or more, more preferably 1% by mass or more. The total amount is also preferably 10% by mass or less, more preferably 4% by mass or less. When the total amount is within the range indicated above, the effects of the present invention can be better achieved.

The total amount of normal alkanes with carbon numbers of 41 and above based on 100% by mass of the wax may be 0% by mass, but is preferably 1% by mass or more, more preferably 2% by mass or more. The total amount is also preferably 15% by mass or less, more preferably 10% by mass or less. When the total amount is within the range indicated above, the effects of the present invention can be better achieved.

Since normal alkanes with carbon numbers of 45 or higher hardly bloom at normal air temperatures of 50°C or lower, their absence does not change the effects.

Thus, the total amount of normal alkanes with carbon numbers of 45 and above based on 100% by mass of the wax is preferably 3% by mass or less, more preferably 2% by mass or less, still more preferably 0.9% by mass or less, and may be 0% by mass.

The total amount of C23-C24 normal alkanes based on 100% by mass of the wax may be 0% by mass, but is preferably 1% by mass or more, more preferably 5% by mass or more, still more preferably 7% by mass or more. The total amount is also preferably 15% by mass or less, more preferably 12% by mass or less, still more preferably 10% by mass or less. When the total amount is within the range indicated above, the effects of the present invention can be better achieved.

The total amount of C25-C29 normal alkanes based on 100% by mass of the wax is preferably 20% by mass or more, more preferably 25% by mass or more, still more preferably 27% by mass or more, but is preferably 45% by mass or less, more preferably 38% by mass or less, still more preferably 34% by mass or less. When the total amount is within the range indicated above, the effects of the present invention can be better achieved.

The total amount of C30-C32 normal alkanes based on 100% by mass of the wax is preferably 5% by mass or more, more preferably 10% by mass or more, still more preferably 12% by mass or more, but is preferably 25% by mass or less, more preferably 20% by mass or less, still more preferably 15% by mass or less. When the total amount is within the range indicated above, the effects of the present invention can be better achieved.

The total amount of C33-C37 normal alkanes based on 100% by mass of the wax is preferably 3% by mass or more, more preferably 7% by mass or more, still more preferably 10% by mass or more, but is preferably 25% by mass or less, more preferably 20% by mass or less, still more preferably 17% by mass or less. When the total amount is within the range indicated above, the effects of the present invention can be better achieved.

The total amount of C38-C40 normal alkanes based on 100% by mass of the wax may be 0% by mass, but is preferably 1% by mass or more, more preferably 2% by mass or more, still more preferably 4% by mass or more. The total amount is also preferably 15% by mass or less, more preferably 10% by mass or less, still more preferably 7% by mass or less. When the total amount is within the range indicated above, the effects of the present invention can be better achieved.

The total amount of C26-C28 normal alkanes based on 100% by mass of the wax is preferably 10% by mass or more, more preferably 15% by mass or more, still more preferably 17% by mass or more, but is preferably 30% by mass or less, more preferably 25% by mass or less, still more preferably 23% by mass or less. When the total amount is within the range indicated above, the effects of the present invention can be better achieved.

The total amount of C33-C35 normal alkanes based on 100% by mass of the wax is preferably 3% by mass or more, more preferably 5% by mass or more, still more preferably 7% by mass or more, but is preferably 20% by mass or less, more preferably 15% by mass or less, still more preferably 11% by mass or less. When the total amount is within the range indicated above, the effects of the present invention can be better achieved.

The total amount of normal alkanes based on 100% by mass of the wax is preferably 70 to 90% by mass, more preferably 75 to 85% by mass.

The total amount of isoalkanes based on 100% by mass of the wax is preferably 10 to 30% by mass, more preferably 15 to 25% by mass.

When these amounts are within the respective ranges indicated above, the effects of the present invention tend to be better achieved.

The amounts of the aforementioned carbon number normal alkanes and isoalkanes in the present invention are measured as described later in EXAMPLES.

Waxes with the aforementioned carbon number distributions may be prepared, for example, by appropriately mixing known waxes.

### [Rubber composition]

The rubber composition of the present invention contains the wax.

This makes it possible to improve discoloration resistance while maintaining excellent ozone resistance over a wide range of ambient temperatures.

The amount of the wax per 100 parts by mass of the rubber component of the rubber composition is preferably 0.5 parts by mass or more, more preferably 0.8 parts by mass or more. When the amount is 0.5 parts by mass or more, the added wax tends to have better effects. The amount is also preferably 5 parts by mass or less, more preferably 3 parts by mass or less, still more preferably 2 parts by mass or less. When the amount is 5 parts by mass or less, better discoloration resistance tends to be obtained.

Examples of the rubber component include diene rubbers such as isoprene-based rubbers, polybutadiene rubber (BR), styrene butadiene rubber (SBR), acrylonitrile butadiene rubber (NBR), chloroprene rubber (CR), butyl rubber (IIR), styrene-isoprene-butadiene copolymer rubber (SIBR), ethylene-propylene-diene rubber (EPDM), butyl rubber (IIR), and halogenated butyl rubber (X-IIR). These diene rubbers may be used alone or in combinations of two or more. To better achieve the effects of the present invention, isoprene-based rubbers, BR, and/or SBR are preferred among these, with combinations thereof being more preferred.

Examples of the isoprene-based rubbers include natural rubber (NR), polyisoprene rubber (IR), refined NR, modified NR, and modified IR. Examples of the NR include those generally used in the tire industry, such as SIR20, RSS#3, and TSR20. Non-limiting examples of the IR include those generally used in the tire industry, such as IR2200. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone or in combinations of two or more.

The amount of the isoprene-based rubbers based on 100% by mass of the rubber component is preferably 5% by mass or more, more preferably 10% by mass or more, but is preferably 40% by mass or less, more preferably 30% by mass or less. When the amount is within the range indicated above, the effects of the present invention tend to be better achieved.

Non-limiting examples of the BR include high-cis BR such as BR1220 available from Zeon Corporation and BR130B and BR150B both available from Ube Industries, Ltd.; and BR containing syndiotactic polybutadiene crystals such as VCR412 and VCR617 available from Ube Industries, Ltd. These may be used alone or in combinations of two or more. In particular, the BR preferably has a cis content of 95% by mass or higher to improve abrasion resistance.

For example, products of Ube Industries, Ltd., JSR Corporation, Asahi Kasei Corporation, and Zeon Corporation may be used as the BR.

The amount of the BR based on 100% by mass of the rubber component is preferably 20% by mass or more, more preferably 30% by mass or more, but is preferably 60% by mass or less, more preferably 50% by mass or less. When the amount is within the range indicated above, the effects of the present invention tend to be better achieved.

Non-limiting examples of the SBR include emulsion-polymerized styrene butadiene rubber (E-SBR) and solution-polymerized styrene butadiene rubber (S-SBR). These may be used alone or in combinations of two or more.

For example, SBR products manufactured or sold by Sumitomo Chemical Co., Ltd., JSR Corporation, Asahi Kasei Corporation, and Zeon Corporation may be used as the SBR.

The amount of the SBR based on 100% by mass of the rubber component is preferably 20% by mass or more, more preferably 30% by mass or more, but is preferably 60% by mass or less, more preferably 50% by mass or less. When the amount is within the range indicated above, the effects of the present invention tend to be better achieved.

The combined amount of the isoprene-based rubbers, BR, and SBR based on 100% by mass of the rubber component is preferably 80% by mass or more, more preferably 90% by mass or more, and may be 100% by mass. When the combined amount is within the range indicated above, the effects of the present invention tend to be better achieved.

The rubber composition of the present invention preferably contains carbon black.

Non-limiting examples of the carbon black include N134, N110, N220, N234, N219, N339, N330, N326, N351, N550, and N762. These may be used alone or in combinations of two or more.

The carbon black preferably has a nitrogen adsorption specific surface area (N₂SA) of 20 m²/g or more, more preferably 50 m²/g or more, still more preferably 80 m²/g or more. Carbon black having a N₂SA of 20 m²/g or more tends to provide better reinforcement. The N₂SA is preferably 180 m²/g or less, more preferably 140 m²/g or less. Carbon black having a N₂SA of 180 m²/g or less tends to disperse more easily, thereby resulting in better handling stability and ozone resistance.

The N₂SA of the carbon black is determined in accordance with JIS K6217-2:2001.

For example, products of Asahi Carbon Co., Ltd., Cabot Japan K.K., Tokai Carbon Co., Ltd., Mitsubishi Chemical Corporation, Lion Corporation, NSCC Carbon Co., Ltd., and Columbia Carbon may be used as the carbon black.

The amount of the carbon black per 100 parts by mass of the rubber component is preferably 2 parts by mass or more, more preferably 10 parts by mass or more. When the amount is 2 parts by mass or more, the carbon black tends to provide better reinforcement. The amount is preferably 60 parts by mass or less, more preferably 40 parts by mass or less. When the amount is 60 parts by mass or less, better handling stability and ozone resistance tend to be obtained.

The rubber composition of the present invention preferably contains silica as an inorganic filler.

Examples of the silica include dry silica (anhydrous silica) and wet silica (hydrous silica). Wet silica is preferred because it contains a large number of silanol groups.

For example, products of Degussa, Rhodia, Tosoh Silica Corporation, Solvay Japan, and Tokuyama Corporation may be used as the silica.

The silica preferably has a nitrogen adsorption specific surface area (N₂SA) of 50 m²/g or more, more preferably 100 m²/g or more, still more preferably 150 m²/g or more. When the N₂SA is 50 m²/g or more, better handling stability and ozone resistance tend to be obtained. The N₂SA is preferably 250 m²/g or less, more preferably 210 m²/g or less. Silica having a N₂SA of 250 m²/g or less tends to disperse more easily, thereby resulting in better handling stability and ozone resistance.

The N₂SA of the silica is measured by the BET method in accordance with ASTM D3037-93.

The amount of the silica per 100 parts by mass of the rubber component is preferably 3 parts by mass or more, more preferably 10 parts by mass or more, still more preferably 20 parts by mass or more, particularly preferably 40 parts by mass or more, but is preferably 80 parts by mass or less, still more preferably 60 parts by mass or less. When the amount of the silica is 80 parts by mass or less, better ozone resistance, discoloration resistance, and tire appearance tend to be obtained. The use of silica in an amount within the range indicated above tends to further improve tire appearance and also provide a higher reinforcing effect.

The rubber composition of the present invention preferably contains a silane coupling agent together with silica.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. These may be used alone or in combinations of two or more. Among these, sulfide silane coupling agents are preferred in order to better achieve the effects of the present invention.

The amount of the silane coupling agent per 100 parts by mass of the silica is preferably 2 parts by mass or more, more preferably 5 parts by mass or more. When the amount is 2 parts by mass or more, better handling stability and ozone resistance tend to be obtained. The amount of the silane coupling agent is also preferably 20 parts by mass or less, more preferably 12 parts by mass or less. When the amount is 20 parts by mass or less, an effect commensurate with the cost increase tends not to be obtained.

The rubber composition of the present invention preferably contains an oil.

Examples of the oil include process oils, vegetable fats and oils, and mixtures thereof. Examples of the process oils include paraffinic process oils, aromatic process oils, and naphthenic process oils. Examples of the vegetable fats and oils include castor oil, cottonseed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Among these, process oils are preferred, with aromatic process oils being more preferred, because in such cases the effects of the present invention tend to be better achieved.

For example, products of Idemitsu Kosan Co., Ltd., Sankyo Yuka Kogyo K.K., Japan Energy Corporation, Olisoy, H&R, Hokoku Corporation, Showa Shell Sekiyu K.K., and Fuji Kosan Co., Ltd. may be used as the oil.

The amount of the oil per 100 parts by mass of the rubber component is preferably 5 parts by mass or more, more preferably 10 parts by mass or more, still more preferably 15 parts by mass or more, but is preferably 60 parts by mass or less, more preferably 40 parts by mass or less, still more preferably 30 parts by mass or less. When the amount of the oil, which itself blooms to the tire surface, is within the range indicated above, blooming of the wax can be more suitably controlled, and the effects of the present invention tend to be more suitably achieved.

The amount of the oil includes the amount of oil present in rubber (oil extended rubber).

The rubber composition of the present invention preferably contains an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. Among these, p-phenylenediamine antioxidants are preferred, with N-(1,3-dimethylbutyl)-N'-phenyl-p-phenylenediamine being more preferred.

For example, products of Seiko Chemical Co., Ltd., Sumitomo Chemical Co., Ltd., Ouchi Shinko Chemical Industrial Co., Ltd., and Flexsys may be used as the antioxidant.

The amount of the antioxidant per 100 parts by mass of the rubber component is preferably 0.1 parts by mass or more, more preferably 0.5 parts by mass or more, but is preferably 10 parts by mass or less, more preferably 7 parts by mass or less. When the amount is within the numerical range indicated above, the effects of the present invention tend to be better achieved.

The rubber composition of the present invention preferably contains stearic acid.

The stearic acid may be a conventional one, and examples include products of NOF Corporation, Kao Corporation, Wako Pure Chemical Industries, Ltd., and Chiba Fatty Acid Co., Ltd.

The amount of the stearic acid per 100 parts by mass of the rubber component in the rubber composition of the present invention is preferably 0.5 parts by mass or more, more preferably 1 part by mass or more, but is preferably 10 parts by mass or less, more preferably 5 parts by mass or less. When the amount is within the numerical range indicated above, the effects of the present invention tend to be well achieved.

The rubber composition of the present invention preferably contains zinc oxide.

The zinc oxide may be a conventional one, and examples include products of Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The amount of the zinc oxide per 100 parts by mass of the rubber component in the rubber composition of the present invention is preferably 0.5 parts by mass or more, more preferably 1 part by mass or more, but is preferably 10 parts by mass or less, more preferably 5 parts by mass or less. When the amount is within the numerical range indicated above, the effects of the present invention tend to be better achieved.

The rubber composition of the present invention preferably contains sulfur.

Examples of the sulfur include those generally used in the rubber industry, such as powdered sulfur, precipitated sulfur, colloidal sulfur, insoluble sulfur, highly dispersible sulfur, and soluble sulfur. These may be used alone or in combinations of two or more.

For example, products of Tsurumi Chemical Industry Co., Ltd., Karuizawa sulfur Co., Ltd., Shikoku Chemicals Corporation, Flexsys, Nippon Kanryu Industry Co., Ltd., and Hosoi Chemical Industry Co., Ltd. may be used as the sulfur.

The amount of the sulfur per 100 parts by mass of the rubber component in the rubber composition of the present invention is preferably 0.5 parts by mass or more, more preferably 1 part by mass or more, but is preferably 10 parts by mass or less, more preferably 5 parts by mass or less, still more preferably 3 parts by mass or less. When the amount is within the numerical range indicated above, the effects of the present invention tend to be well achieved.

The rubber composition of the present invention preferably contains a vulcanization accelerator.

Examples of the vulcanization accelerator include thiazole vulcanization accelerators such as 2-mercaptobenzothiazole, di-2-benzothiazolyldisulfide, and N-cyclohexyl-2-benzothiazolylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Among these, sulfenamide vulcanization accelerators are preferred in order to more suitably achieve the effects of the present invention.

For example, products of Ouchi Shinko Chemical Industrial Co., Ltd. and Sanshin Chemical Industry Co., Ltd. may be used as the vulcanization accelerator.

The amount of the vulcanization accelerator per 100 parts by mass of the rubber component in the rubber composition of the present invention is preferably 0.1 parts by mass or more, more preferably 0.5 parts by mass or more, but is preferably 10 parts by mass or less, more preferably 5 parts by mass or less. When the amount is within the numerical range indicated above, the effects of the present invention tend to be better achieved.

The rubber composition of the present invention preferably contains a surfactant.

When a surfactant is combined with the wax, the effects of the present invention (particularly discoloration resistance) can be more significantly (synergistically) achieved.

Non-limiting examples of the surfactant include metallic soaps such as metal salts of organic acids; and nonionic surfactants such as polyoxyalkylene derivatives. These may be used alone or in combinations of two or more.

Suitable examples of the metal salts of organic acids include metal salts of carboxylic acids.

Examples of the polyoxyalkylene derivatives include ether polyoxyalkylene derivatives such as polyoxyalkylene alkyl ethers; ester polyoxyalkylene derivatives such as polyoxyalkylene fatty acid esters; ether ester polyoxyalkylene derivatives such as polyoxyalkylene glycerol fatty acid esters; and nitrogen-containing polyoxyalkylene derivatives such as polyoxyalkylene fatty acid amides and polyoxyalkylene alkylamines.

Among the above surfactants, polyoxyalkylene alkyl ethers or polyoxyalkylene fatty acid esters are particularly preferred in view of the balance between fuel economy and other rubber properties.

The amount of the surfactant per 100 parts by mass of the rubber component in the rubber composition of the present invention is preferably 0.1 parts by mass or more, more preferably 0.5 parts by mass or more, but is preferably 5 parts by mass or less, more preferably 3 parts by mass or less. When the amount is within the range indicated above, the effects of the present invention tend to be better achieved.

In addition to the above-mentioned ingredients, the rubber composition of the present invention may contain other additives generally used in the tire industry. Examples include inorganic fillers other than silica and vulcanizing agents other than sulfur (e.g. organic crosslinking agents).

Examples of the inorganic fillers other than silica include calcium carbonate, calcium silicate, magnesium oxide, aluminum oxide, alumina, hydrated alumina, aluminum hydroxide, magnesium hydroxide, magnesium oxide, barium sulfate, talc, and mica. When inorganic fillers other than silica are present, the total amount of all inorganic fillers may suitably be equal to the total amount defined for the silica.

Non-limiting examples of the organic crosslinking agents include maleimide compounds, alkylphenol-sulfur chloride condensates, organic peroxides, and amine organic sulfides. These may be used alone or in combinations of two or more, and may be combined with sulfur.

The organic crosslinking agents may be incorporated in an amount of, for example, 10 parts by mass or less per 100 parts by mass of the rubber component.

The rubber composition of the present invention may be prepared by known methods, such as by kneading the above-mentioned ingredients in a rubber kneading machine such as an open roll mill or a Banbury mixer, and vulcanizing the kneaded mixture.

The rubber composition of the present invention can be suitably used as a rubber composition for tires. The rubber composition of the present invention can be used in various tire components. In particular, it is suitable for use as a rubber composition for tire outer layers such as treads, sidewalls, clinches, or wings, particularly for treads.

### [Pneumatic tire]

The pneumatic tire of the present invention may be prepared by usual methods using the rubber composition.

Specifically, the rubber composition containing the ingredients, before vulcanization, may be extruded into the shape of a tire component such as a tread, sidewall, clinch, or wing and assembled with other tire components on a tire building machine in a usual manner to build an unvulcanized tire, which may then be heated and pressurized in a vulcanizer to produce a tire.

The pneumatic tire of the present invention may be used as, for example, a tire for passenger vehicles, trucks and buses, or two-wheeled vehicles, or as a high performance tire. The term "high performance tire" as used herein refers to a tire particularly excellent in grip performance and conceptually includes racing tires for use in racing vehicles.

### EXAMPLES

The present invention is specifically described with reference to, but not limited to, examples below.

The chemicals used in the examples and comparative examples are listed below.
NR: RSS#3
SBR: solution-polymerized SBR (bound styrene content: 23% by mass, Tg: -21°C)
BR: BR150B (cis content: 98% by mass) available from Ube Industries, Ltd.
Carbon black: N₂SA 114 m²/g
Silica: N₂SA 175 m²/g
Silane coupling agent: bis(3-triethoxysilylpropyl)-tetrasulfide
Oil: aromatic process oil
Wax 1: trial product 1 prepared by appropriately mixing known waxes to have the carbon number distribution shown in Table 1
Wax 2: trial product 2 prepared by appropriately mixing known waxes to have the carbon number distribution shown in Table 1
Wax 3: trial product 3 prepared by appropriately mixing known waxes to have the carbon number distribution shown in Table 1
Wax 4: trial product 4 prepared by appropriately mixing known waxes to have the carbon number distribution shown in Table 1
Wax 5: trial product 5 prepared by appropriately mixing known waxes to have the carbon number distribution shown in Table 1
Wax 6: trial product 6 prepared by appropriately mixing known waxes to have the carbon number distribution shown in Table 1
Wax 7: trial product 7 prepared by appropriately mixing known waxes to have the carbon number distribution shown in Table 1
Wax 8: trial product 8 prepared by appropriately mixing known waxes to have the carbon number distribution shown in Table 1
Wax 9: Ozoace 0355 available from Nippon Seiro Co., Ltd.
Wax 10: Ozoace 0015 available from Nippon Seiro Co., Ltd.
Wax 11: PW-125 available from Nippon Seiro Co., Ltd.
Wax 12: Maxprot 2210 available from Maxwell
Antioxidant: N-(1,3-dimethylbutyl)-N'-phenyl-p-phenylenediamine
Surfactant: EMULGEN 123P (nonionic surfactant, polyoxyethylene lauryl ether) available from Kao Corporation
Stearic acid: stearic acid available from NOF Corporation
Zinc oxide: zinc oxide #1 available from Mitsui Mining & Smelting Co., Ltd.
Sulfur: powdered sulfur available from Tsurumi Chemical Industry Co., Ltd.
Vulcanization accelerator: N-t-butyl-2-benzothiazolyl sulfenamide

The carbon number distribution of waxes 1 to 12 was measured as described below. Table 1 shows the results.

The measurement was performed using a capillary GC measuring apparatus with an aluminum-coated capillary column under conditions including helium carrier gas, a flow rate of 4 ml/min, a column temperature of 180 to 390°C, and a rate of temperature increase of 15°C/min.

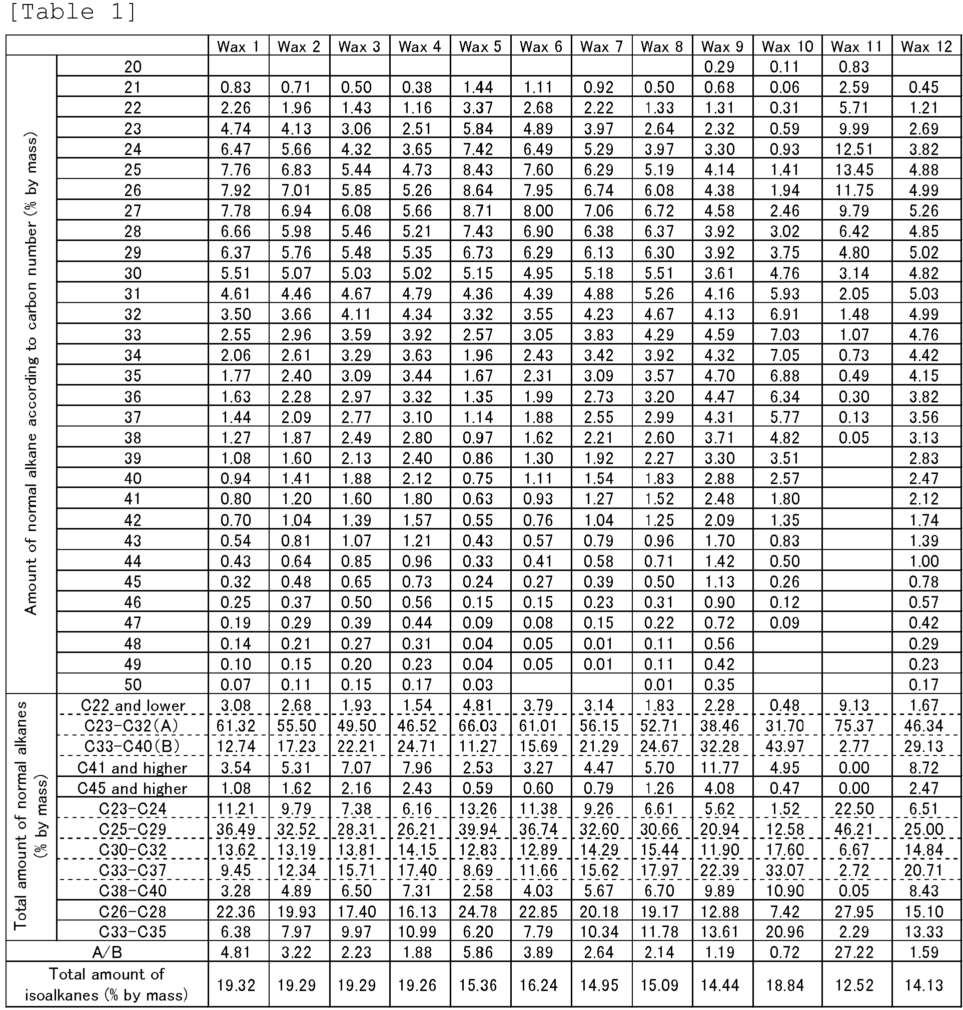

### (Examples 1 to 25 and Comparative Examples 1 to 4)

According to each of the formulations shown in Tables 2 and 3, the chemicals other than the sulfur and vulcanization accelerator were kneaded using a 1.7 L Banbury mixer available from Kobe Steel, Ltd. Next, the kneaded mixture was kneaded with the sulfur and vulcanization accelerator using an open roll mill to obtain an unvulcanized rubber composition. The unvulcanized rubber composition was formed into a tread shape and assembled with other tire components to obtain an unvulcanized tire. The unvulcanized tire was vulcanized at 170°C to prepare a test tire (205/65 R15). The performance of the test tires prepared as above was evaluated in the following tests.

### (Cracking test)

Road tests were conducted in the United Arab Emirates in the Middle East as a hot climate for approximately one year (including summer) and in Siberia, Russian Federation as a cold climate for approximately one year (including winter). The degree of cracking produced was evaluated based on the criteria below. A greater number indicates better ozone resistance.

### (Criteria)

1: A crack or break of 3 mm or greater was observed.
2: A deep crack of at least 1 mm but less than 3 mm was observed.
3: A deep and relatively large crack of less than 1 mm was observed.
4: A crack or break was barely visible to the naked eye.
5: A crack or break was not visible to the naked eye but visible with a magnifier (× 10).

### (Discoloration test)

### Indoor: Evaluation of white discoloration

The tires were left inside a warehouse for 6 months (from spring to autumn) in Kobe. Then, L* value was measured using a colorimeter. Based on the values, the white discoloration of the tires was evaluated on a five-point scale according to the criteria below. A greater number indicates a lower degree of white discoloration.

### [Criteria]

1: 100 - L* ≤ 60
2: 60 < 100 - L* ≤ 65
3: 65 < 100 - L* ≤ 70
4: 70 < 100 - L* ≤ 75
5: 100 - L* > 75

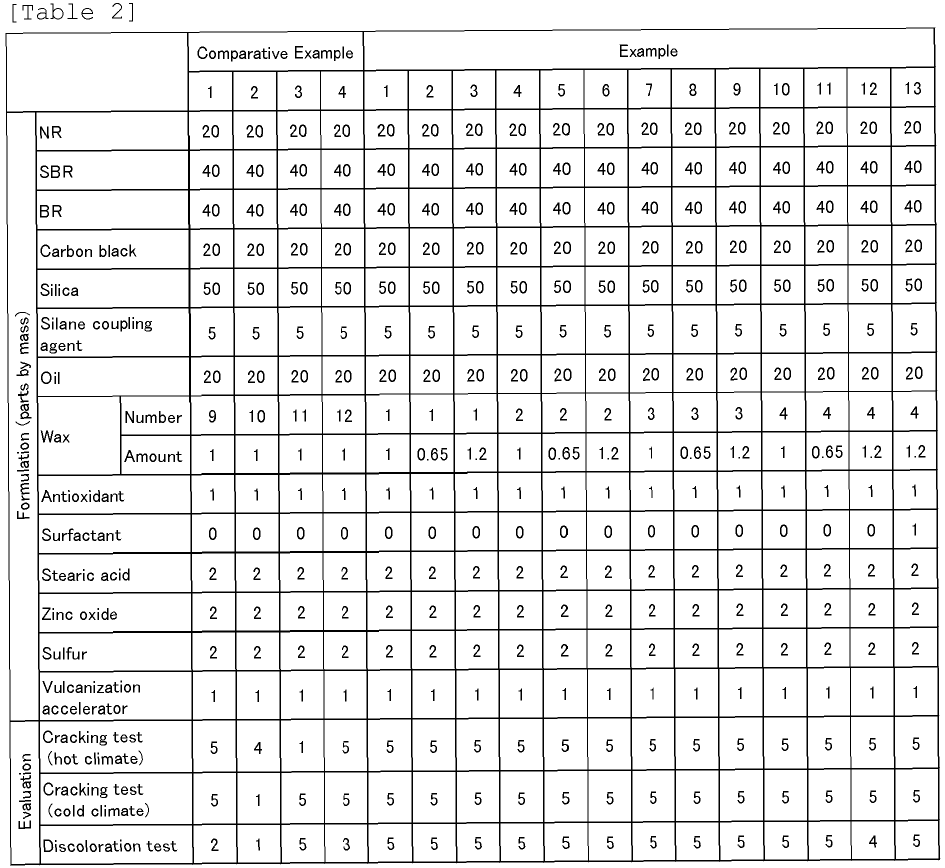

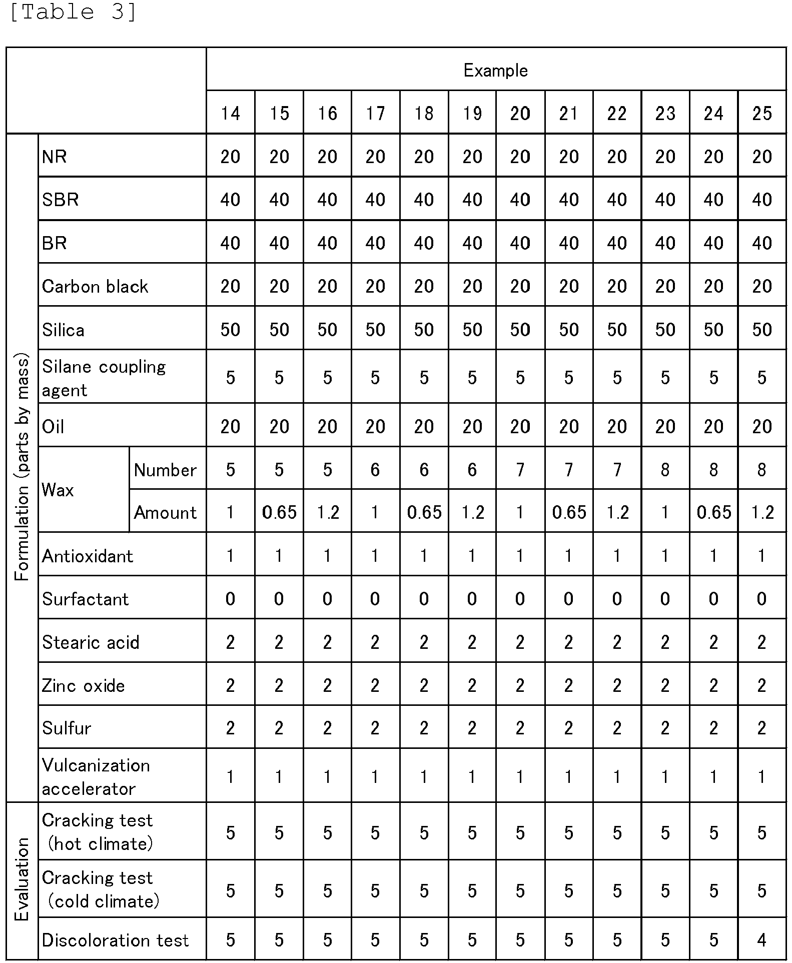

Tables 2 and 3 demonstrate that the examples containing a wax having a ratio of (A) the total amount of C23-C32 normal alkanes to (B) the total amount of C33-C40 normal alkanes (A/B) of 1.7 to 6 exhibited improved discoloration resistance while maintaining excellent ozone resistance over a wide range of ambient temperatures.

## Claims

1. A wax, having a ratio of (A) a total amount of C23-C32 normal alkanes to (B) a total amount of C33-C40 normal alkanes (A/B) of 1.7 to 6, a total amount of C23-C32 normal alkanes (A) of 40 to 70% by mass based on 100% by mass of the wax, and a total amount of C33-C40 normal alkanes (B) of 25% by mass or less based on 100% by mass of the wax.

2. A rubber composition, comprising the wax according to claim 1.

3. A pneumatic tire, comprising the rubber composition according to claim 2.

## Patentansprüche

1. Wachs mit einem Verhältnis von (A) einer Gesamtmenge C23-C32-Normalalkane zu (B) einer Gesamtmenge C33-C40-Normalalkane (A/B) von 1,7 bis 6, einer Gesamtmenge C23-C32-Normalalkane (A) von 40 bis 70 Massen-% auf Basis von 100 Massen-% des Wachses und einer Gesamtmenge C33-C40-Normalalkane (B) von 25 Massen-% oder weniger auf Basis von 100 Massenprozent des Wachses.

2. Kautschukzusammensetzung, umfassend das Wachs nach Anspruch 1.

3. Luftreifen, umfassend die Kautschukzusammensetzung nach Anspruch 2.

## Revendications

1. Cire, ayant un rapport de (A), une quantité totale d'alcanes normaux en C23 à C32 sur (B), une quantité totale d'alcanes normaux en C33 à C40, (A/B), de 1,7 à 6, une quantité totale d'alcanes normaux en C23 à C32 (A) de 40 à 70 % en masse sur la base de 100 % en masse de cire, et une quantité totale d'alcanes normaux en C33 à C40 (B) de 25 % en masse ou moins sur la base de 100 % en masse de cire.

2. Composition de caoutchouc comprenant la cire selon la revendication 1.

3. Pneumatique, comprenant la composition de caoutchouc selon la revendication 2.
